(19) Europäisches Patentamt
European Patent Office
Office européen des brevets

(11) **EP 1 274 886 B1**

(12) **EUROPÄISCHE PATENTSCHRIFT**

(45) Veröffentlichungstag und Bekanntmachung des Hinweises auf die Patenterteilung:
**30.05.2007  Patentblatt 2007/22**

(21) Anmeldenummer: **01945049.3**

(22) Anmeldetag: **25.04.2001**

(51) Int Cl.:
*D01D 5/06* *(2006.01)*    *D01D 10/04* *(2006.01)*

(86) Internationale Anmeldenummer:
**PCT/EP2001/004689**

(87) Internationale Veröffentlichungsnummer:
**WO 2002/012600 (14.02.2002 Gazette 2002/07)**

(54) **VERFAHREN UND VORRICHTUNG ZUM EXTRUDIEREN EINES ENDLOSFORMKÖRPERS**

METHOD AND DEVICE FOR EXTRUDING A CONTINUOUS MOULDED BODY

PROCEDE ET DISPOSITIF D'EXTRUSION D'UN CORPS MOULU CONTINU

(84) Benannte Vertragsstaaten:
**AT BE CH CY DE DK ES FI FR GB GR IE IT LI LU MC NL PT SE TR**

(30) Priorität: **03.08.2000  DE 10037922**

(43) Veröffentlichungstag der Anmeldung:
**15.01.2003  Patentblatt 2003/03**

(73) Patentinhaber: **Zimmer Aktiengesellschaft
60388 Frankfurt am Main (DE)**

(72) Erfinder:
• **ZIKELI, Stefan
A-4844 Regau (AT)**
• **ECKER, Friedrich
A-4850 Timelkam (AT)**

(74) Vertreter: **Grünecker, Kinkeldey,
Stockmair & Schwanhäusser
Anwaltssozietät
Maximilianstrasse 58
80538 München (DE)**

(56) Entgegenhaltungen:
**GB-A- 720 187          US-A- 4 869 860
US-A- 5 417 909**

EP 1 274 886 B1

**Beschreibung**

Die Erfindung betrifft ein Verfahren zum Extrudieren eines Endlosformkörpers aus einer Extrusionslösung, insbesondere einer Extrusionslösung enthaltend Wasser, Zellulose und tertiäres Arminoxid, wobei das Verfahren die folgenden Verfahrensschritte umfasst: Durchleiten der Extrusionslösung durch eine Mehrzahl von Extrusionskanälen mindestens eines Extrusionskopfes, wobei die Extrusionskanäle in einer vorbestimmten Anzahl r von Reihen angeordnet sind, zu einer Extrusionskanalöffnung; Extrudieren der Extrusionslösung durch die Extrusionskanalöffnungen mit einer vorgebbaren Abzugsgeschwindigkeit zu jeweils einem extrudierten Formkörper, Durchleiten der extrudierten Endlosformkörper durch einen Luftspalt.

Als tertiäres Aminoxid kann beispielsweise N-Methylmorpholin N-Oxid (NMMO) verwendet werden. Außerdem können in der Extrusionslösung Stabilisatoren zur thermischen Stabilisierung der Cellulose und des Lösungsmittels des weiteren gegebenenfalls weitere Additive oder Inkorporationsstoffe wie z.B. Titandioxid, Bariumasulfat, Graphit, Carboxymethylcellulosen, Polyethylenglycole, Chitin, Chitosan, Alginsäure, Polysaccharide, Farbstoffe, antibakteriell wirkende Chemikalien, Flammschutzmittel enthaltend Phosphor, Halogene oder Stickstoff, Aktivkohle, Russe oder elektrisch leitfähige Russe, Kieselsäure, organische Lösungsmittel als Verdünnungsmittel, etc enthalten sein.

Als Extrusionslösung dient vorzugsweise eine Zelluloselösung, die neben Wasser und Zellulose ein tertiäres Arminoxid, wie beispielsweise N-Methylmorpholin-N-Oxid (NMMO) enthält. Solche Zelluloselösungen werden zur Extrusion von Endlosformkörpem, die als Stapelfasern, Filamente sowie Nonwovens bzw. Fibrids beispielsweise zur Herstellung von Textilien eingesetzt werden, verwendet.

Das eingangs genannte Verfahren ist beispielsweise aus der WO 93/19230 bekannt. Dort werden als Spinndüsen ausgebildete Extrusionsköpfe zur Herstellung von Endlosformkörpern in Form von Zellulosefasern verwendet. Durch die dort beschriebene Anordnung wird bereits eine gute Wirtschaftlichkeit bei der Erzeugung von Zellulosefasern erreicht. Allerdings ist dazu ein hoher konstruktiver Aufwand notwendig, da das Verfahren nur mit einer Beblasung quer zur Extrusionsrichtung der Zellulosefasern wirtschaftlich funktioniert.

Ähnliche Verfahren sind beispielsweise aus der US 4,869,860, US 3,767,756 oder US 4,340,559 bekannt.

Beim Verfahren der WO 95104173 wird die Wirtschaftlichkeit des Spinnverfahrens durch die Verwendung einer vollflächig durchbohrten Ringdüse verbessert. Jedoch ist bei der Vorrichtung und dem Verfahren der WO 95/04173 nach wie vor ein hoher konstruktiver Aufwand in Form einer Beblasung bzw. der ebenfalls notwendigen Absaugvorrichtung erforderlich, um das Verfahren wirtschaftlicher zu machen.

Ein Spinnkopf, durch den das erfindungsgemäße Verfahren durchgeführt werden kann, ist aus der WO 98/18983 bekannt. Bei diesem Spinnkopf sind die Spinnöffnungen auf eine vorbestimmte Weise angeordnet, um die Wirtschaftlichkeit des Verfahrens zu erhöhen.

Auf Basis der oben angeführten Druckschriften sowie der darin dargestellten Tabellen und Ausführungsbeispiele lässt sich die Anzahl der erforderlichen Spinnstellen für kommerziell sinnvolle Anlagengrößen abschätzen.

Aus den Angaben in der WO 95/04173 lässt sich errechnen, daß bei einer Produktion von ca. 4,5 kg/h Faser je Spinnstelle für eine kommerzielle Anlage zur Herstellung von Stapelfasern nach dem darin beschriebenen Verfahren, je nach Anlagengröße, eine Spinnstellenanzahl von 200 bis 1000 Positionen je Anlage erforderlich ist.

Neben dem hohen maschinentechnischen, regel- und steuerungstechnischen Aufwand, sowie dem hohen Personalaufwand zur Bedienung von Anlagen mit einer derart großen Anzahl an Einzelspinnstellen ist vor allem auch das aus dem NMMO-Verfahren bekannte Problem der beschränkten Thermostabilität der Spinnbzw. Extrusionslösung zu beachten.

Durch die große Anzahl von Einzelspinnstellen muss ein langes, weitverzweigtes Rohrleitungssystem vorgesehen sein. Bei einem solchen Rohrleitungssystem steigt die Gefahr eines spontan auftretenden Abbaus der Spinnmasse in Form einer exothermen Reaktion aufgrund langer Verweilzeiten bei hoher Temperatur drastisch an. Um dieser Gefahr zu begegnen, sind weitere aufwendige konstruktive Maßnahmen beispielsweise in Form von Berstschutzeinrichtungen nötig.

Angesichts der im Stand der Technik verfolgten Lösungen liegt der Erfindung die Aufgabe zugrunde, die bekannten Verfahren wirtschaftlicher zu machen, ohne dass ein hoher konstruktiver Aufwand notwendig ist.

Dies wird erfindungsgemäß für das eingangs genannte Verfahren dadurch erreicht, dass das Verfahren den folgenden Verfahrensschritt aufweist: Steuern der Abzugsgeschwindigkeit v in m/min in Abhängigkeit von der Anzahl r von Reihen, vom Fasertiter T in dtex und von einem Betriebsparameter B auf einen Wert

$$ v = B \cdot T^{0,33} \cdot 10000 \cdot (1/r^2), $$

wobei der Betriebsparameter B einen Wert von höchstens 4 aufweist.

Überraschenderweise ergibt sich bei einer Steuerung der Extrusionsgeschwindigkeit nach dieser Formel eine wesentliche Verbesserung der Wirtschaftlichkeit sowie ein ausschussfreier Ausstoß an Endlosformkörpern. Eine Beblasung ist bei dem erfindungsgemäß gesteuerten Verfahren nicht mehr notwendig, so dass konstruktiv einfachere Vorrichtungen zur Ausführung des Verfahrens verwendet werden können. Die Spinneinheiten werden dadurch kostengünstiger.

Die Wirtschaftlichkeit wird erhöht, da sich bei erfindungsgemäßer Steuerung höchste Lochdichten bei guter Spinnsicherheit erzielen lassen. Die Spinnsicherheit stellt dabei ein Maß für die Betriebs- oder Ausfallsicherheit des Verfahrens dar. Eine gute Spinnsicherheit wird dann erhalten, wenn die Endlosformkörper beim Extrusionsverfahren beispielsweise nicht abreißen und auch nicht zusammenkleben.

Die Spinnsicherheit wird durch den Betriebsparameter B berücksichtigt: Je größer B ist, um so niedriger wird die Spinnsicherheit und umso wahrscheinlicher sind Betriebsausfälle. Erfindungsgemäß ist bei einem Wert von B<4 eine gute Spinnsicherheit mit gleichzeitig hohen Wirtschaftlichkeitszuwächsen gegeben.

Diese Wirtschaftlichkeitszuwächse sind gekennzeichnet durch einerseits bessere Betriebsbedingungen, wie etwa eine optimierte Abzugsgeschwindigkeit, gleichmäßige Strömungsverhältnisse im Spinnkopf, eine gute Handhabbarkeit durch geringe Tauchtiefe in der Wanne, gute Möglichkeiten zur Prozessüberwachung, ein einfacher Düsenaustausch sowie andererseits durch einen geringeren konstruktiven Aufwand, wie etwa aufgrund der nicht mehr notwendigen Beblasung und Absaugung samt der dazugehörenden Aggregate und Luftkanäle, eine einfachere Konstruktion des Extrusionskopfes, sowie der einfacheren Wannenkonstruktion.

Die Spinnsicherheit kann in weiteren Ausgestaltungen nochmals erhöht werden, wenn B höchstens 3,5 oder höchstens 3 beträgt.

Bei einem Betriebswert von unter 0,5 ist zwar eine hohe Spinnsicherheit vorhanden, doch ist damit gemäß der vorliegenden Erfindung kein wirtschaftliches System mehr darstellbar.

Die Erfindung betrifft auch einen Extrusionskopf gemäß Oberbegriff des Anspruches 10 zum Extrudieren eines Endlosformkörpers aus einer Extrusionslösung, insbesondere einer Extrusionslösung enthaltend Wasser, Zellulose und tertiäres Arminoxid, mit einer Mehrzahl von Extrusionskanälen, durch welche die Extrusionslösung mit einer Extrusionsgeschwindigkeit zu einer Extrusionskanalöffnung geleitet ist, wobei die Extrusionslösung durch die Extrusionskanalöffnung zu einem Endlosformkörper extrudierbar ist Extrusionsköpfe mit diesen Merkmalen sind ebenfalls aus der WO 93/19230, WO 95/04173 und aus der WO 98/18983 bekannt.

Nachteilig bei den dort beschriebenen Extrusionsköpfen ist, wie oben bereits ausgeführt dass eine hohe Lochdichte nur mit einem hohen konstruktiven Aufwand erzielt werden kann, des weiteren ist der Betrieb der herkömmlichen Anlagen mit Beblasung und Absaugung durch die schlechte Zugänglichkeit für das Bedienungspersonal erschwert. Dabei ist eine hohe Wirtschaftlichkeit des Verfahrens gleichbedeutend mit einer hohen Lochdichte in Verbindung mit einer hohen Lochzahl je Spinnstelle .

Der Erfindung liegt daher die Aufgabe zugrunde, bei einem gattungsgemäßen Extrusionskopf die Wirtschaftlichkeit zu erhöhen, indem der konstruktive Aufwand möglichst gering gehalten wird. Gute Bedienbarkeit bei gleichzeitiger Erhaltung der guten Eigenschaften der Formkörper sind erfindungsgemäß ebenfalls zu gewährleisten. Die guten Eigenschaften sind zum Beispiel: gleichmäßige Festigkeit, Dehnung, verklebungsfreie Formkörper.

Die nach dem erfindungsgemäßen Verfahren hergestellten Faserprodukte weisen die gleichen textilen Faserdaten auf wie Lyocell Fasern, die nach dem Stand der Technik erzeugt sind.

Dieses Ziel wird erfindungsgemäß für einen gattungsgemäßen Extrusionskopf dadurch erreicht, dass die Anzahl der Reihen r von Extrusionskanalöffnungen des Extrusionskopfes in Abhängigkeit von Fasertiter T in dtex von der Abzugsgeschwindigkeit v in m/min und von einem Betriebsparameter B

$$r = [(B/v) \cdot 10.000 \cdot T^{0,33}]^{1/2}$$

beträgt, wobei der Betriebsparameter B höchstens einen Wert von 4 aufweist.

Durch diese Ausgestaltung des Extrusionskopfes lassen sich höchste Lochdichten auch ohne Beblasung erreichen, wobei die Wirtschaftlichkeit gegenüber dem bekannten Stand der Technik wesentlich erhöht werden kann.

Auch bei der Vorrichtung beträgt der Betriebsparameter in einer weiteren vorteilhaften Ausgestaltung höchstens 3,5 bzw. höchstens 3. Für alle Ausgestaltungen gilt, daß auf grund der erforderlichen Wirtschaftlichkeit von Spinnsystemen der Betriebswert B den Betrag 0,5 nicht unterschreiten soll.

Die Erfindung betrifft schließlich auch eine Anlage zum Extrudieren eines Endlosformkörpers, die mindestens einen erfindungsgemäßen Extrusionskopf aufweist.

Eine derartige Anlage umfasst beispielsweise eine Spinnmassenherstellung, bzw. bekannte, der Spinnmassenherstellung vorgelagerte Prozessschritte, der Spinnmasseherstellung nachgelagerte Prozessschritte wie Filtration sowie einen oder mehrere Vorratsbehälter für die Extrusionslösung, ein Leitungssystem welches mit Temperiervorrichtungen sowie Druckentlastungen ausgestattet sein kann. Durch das Leitungssystem wird die Extrusionslösung mittels Pumpen vom Vorratsbehälter zum Extrusionskopf gefördert ist. Die Anlage kann schließlich auch einen oder mehrere Ausgleichsbehälter aufweisen, die Druck- und Volumenstromschwankungen im Leitungssystem ausgleichen und für eine konstante Beschickung des Extrusionskopfes sorgen sollen.

Zur Steuerung von v und damit, bei gegebener Spinnmassenmenge, auch des Titers T sind je nach Ausgestaltung der Anlage ein oder mehrere Abzugswerke vorhanden. Des weiteren besteht die Anlage aus den bekannten je nach Anlagenausführung unterschiedlich ausgeführten Maschinen und Vorrichtungen zum Schneiden, Waschen, Nachbehandeln, Trocknen, Öffnen, Pressen und Verpacken der erzeugten Faser.

In Extrusionsrichtung ist nach dem Extrusionskopf gewöhnlicherweise ein Luftspalt angeordnet, durch den der Endlosformkörper durchgeleitet wird. Aufgrund der in einer vorteilhaften Weiterbildung reihenförmig und dicht nebeneinander angeordneten Extrusionskanalöffnungen bilden die einzelnen Endlosformkörper einen im Wesentlichen ebenen breit gefächerten Vorhang. Um die Breite des Vorhangs und damit die Wirtschaftlichkeit des Verfahrens und der Vorrichtung zu erhöhen, kann der Extrusionskopf insbesondere in Reihenrichtung gegenüber der dazu senkrechten Richtung stark verlängert sein.

Nach Durchqueren des Luftspaltes tritt der aus den einzelnen Endlosformkörpern zusammengesetzte Vorhang in ein Fällbad, das vorzugsweise in einer Wanne gehalten ist, ein. In der Wanne wird der breitgefächerte Vorhang durch eine Umlenkeinrichtung umgelenkt und zu einer Sammeleinrichtung geleitet, bei der die Endlosformkörper auf im Wesentlichen einen Punkt zusammengeführt werden.

Die Sammeleinrichtung kann vorzugsweise außerhalb des Fällbades angeordnet sein.

In Verbindung mit der erfindungsgemäßen Führung und Umlenkung der erzeugten Spinnfadenschar als breitgefächertes flaches Band in einer Spinnwanne - nach dem bisherigen Stand der Technik werden die Spinnfäden einer Spinnposition noch im Spinnbad auf einem Punkt zusammengeführt- kann nunmehr jede einzelne Spinndüse in Reihenrichtung wesentlich länger als bisher ausgestaltet werden.

Entgegen der erfindungsgemäßen breitgefächerten Führung der Fadenschar wirkt sich bei der punktförmigen Zusammenführung des Faserkabels im Spinnbadbereich nach dem Stand der Technik der mit zunehmender Düsengröße stark zunehmende Bündelungswinkel nachteilig aus.

Im Stand der Technik wird bei einer punktförmigen ZusammenfOhrung des Faserbündels der aus der Düse austretende Polymerstrahl an der Düsenaustrittskante bei einem großen Bündelungswinkel stark umgelenkt, was zu einer Beeinträchtigung des Extrusions- und Spinnvorgangs führt. Da der Bündelungswinkel mit zunehmender Düsengröße steigt, sind der Größe der Düsen Grenzen gesetzt.

Die großen Bündelungswinkel wirken sich ebenfalls negativ auf Strömungsvorgänge und die Badverdrängung in der Fadenschar aus, bei großen Bündelungsvvinkeln sind verstärkte Turbulenzen und Rückströmungen im Spinnbad zu beobachten.

In WO 96120300 wird auf diese Probleme eingegangen, indem eine Formelbeziehung für den maximal zulässigen Bündetungswinkel für ein Spinnsystem mit punktförmiger Umlenkvorrichtung im Spinnbad angegeben ist. Allerdings treten bei den Bündelungswinkeln gemäß dieser Formelbeziehung bei großen Durchmessern der Düse hohe Tauchtiefen auf. Die hohen Tauchtiefen wirken sich zudem negativ auf die Handhabung aus, außerdem erhöhen sich die Reibkräfte zwischen Fadenschar und Spinnbad sowie am Umlenkpunkt der Umlenkeinrichtung.

Ein weiteres Problem bei der Ausführung nach WO 96/20300 besteht im erschwerten Austausch von Spinnbadflüssigkeit in der Fadenschar. Zur wirtschaftlichen Gestaltung einer derart gestalteten Einzelspinnposition mit Ringdüsen ist eine Vielzahl an Fadenreihen erforderlich. In Verbindung mit einer punktförmigen Umlenkung bildet sich ein Fadenkegel, dessen Spinnbadvolumen zur Verhinderung von zu hohen Konzentrationsunterschieden ständig ausgetauscht werden muß. Aufgrund der Ringform muß nicht nur das die Spinnfäden direkt umgebende Spinnbad durch die Spinnfäden hindurch ausgetauscht werden, sondern auch das Spinnbadvolumen, das durch den Fadenkegel eingeschlossen ist. Dies führt zu erhöhten Belastungen der einzelnen Spinnfäden, aber auch zu Turbulenzen, die den Spinnprozess stören.

In der WO 94/28218 ist ein anderer Ansatz dargestellt, dort wird die aus einer Rechteckdüse austretende Fadenschar durch einen Spinnbadbehälter geführt, der am unteren Ende eine Austrittsöffnung aufweist, durch weiche die Fadenschar punktförmig gebündelt und aus dem Spinnbadsystem abgeführt wird.

Auch dieses System ist durch den Zwang, zu große Bündelungswinkel zu vermeiden, in der Wirtschaftlichkeit eingeschränkt. Um die Bündetungswinket klein zu halten, sind auch bei dieser Ausführung hohe Tauchtiefen mit all den vorhin beschriebenen negativen Auswirkungen erforderlich. Zusätzlich bewirkt die hohe Tauchtiefe eine hohe Spinnbadaustrittsgeschwindigkeit an der untenliegenden Austrittsöffnung. Diese hohe Spinnbadaustrittsgeschwindigkeit wirkt sich sowohl beim Anspinnvorgang, als auch während des Betriebs durch auftretende Turbulenzen negativ auf den Spinnprozess aus. Die hohe Badaustrittsgeschwindigkeit-kann den Fadenlauf in Form von Durchhängern, das sind durch die hohe Badaustrittsgeschwindigkeit mitgerissene Einzelfäden, die am Umlenkpunkt unter dem Spinnbadaustritt nicht gespannt umgelenkt werden sondern nach unten durchhängen, stören. Zudem ist bei erhöhter Fadenzahl je Spinnstelle auch eine größere Austrittsöffnung erforderlich, wodurch erhebliche Spinnbadmengen umgewälzt werden müssen, die zusätzlich zu Turbulenzen führen.

Die in WO 94/28218 bzw. WO 96/20300 dargestellten Spinnbadbehälter erschweren in Verbindung mit den erforderlichen hohen Tauchtiefen aber auch das Anspinnen und das Hantieren an den Spinnstellen ganz wesentlich.

Um die, vor allem beim Anspinnvorgang erforderliche Manipulation der ersponnenen Fadenschar in der Tauchstrecke von Hand durch einen Bediener trotz der beschränkten Armlänge des Bedieners zu ermöglichen, ist zusätzlicher maschineller Aufwand erforderlich.

Wie in den genannten Patentschriften ausgeführt ist, wird entweder durch Öffnungen (Toren) - bei der WO 94/28218 - oder durch zusätzliche Hebevorrichtungen - bei der WO 96/20300 - zum Heben und Senken des Spinnbadbehälters der nötige Zugang geschaffen.

Diese zusätzlichen Vorrichtungen bedeuten einen erhöhten Aufwand und reduzieren somit die Wirtschaftlichkeit ganz wesentlich.

Durch die erfindungsgemäß breitgefächerte Umlenkung der Fadenschar, beispielsweise als Vorhang, ergibt sich die Möglichkeit, wie bereits oben angeführt, die Düsenlänge und somit die Wirtschaftlichkeit einer Spinnstelle wesentlich zu erhöhen.

Zusätzlich kann aufgrund der breitgefächerten Führung der Fadenschar im Fällbad die Tauchtiefe auf das für den Koagulationsvorgang notwendige Maß reduziert werden. Mit dieser Maßnahme sind die folgenden Probleme, die bei Spinnsystemen nach dem Stand der Technik vorhanden sind, gelöst oder minimiert:

- Durch die Ausführung der Düse in Rechteckform ergibt sich im Gegensatz zu einer Ringdüse kein eingeschlossener Spinnbadkegel, der zusätzlich verdrängt werden muss.

- Die Verdrängungsvorgänge durch die Fadenschar im Spinnbad sind minimiert, dadurch-werden Turbulenzen und Rückströmungen vermieden.

- Die Reibkräfte zwischen Spinnbad und Fadenschar und somit auch die Reibkräfte an der Umlenkvorrichtung sind minimiert.

- Durch die Umlenkung im Spinnbadbehälter entfällt die untere Austrittsöffnung mit den damit verbundenen negativen Auswirkungen auf Spinnverhalten, Turbulenzen und Handhabung.

- Der vor allem beim Anspinnvorgang erforderliche Zugang zur Manipulation der ersponnenen Fadenschar in der Tauchstrecke von Hand ist durch die stark reduzierte Tauchtiefe wesentlich vereinfacht.

- Der konstruktive Aufwand und somit die Kosten für ein derart ausgeführtes System sind wesentlich reduziert.

Schließlich kann, wenn bei einer Spinnanlage eine Vielzahl von erfindungsgemäß ausgestatteten Extrusionsköpfen verwendet wird, jedem Extrusionskopf eine Umlenkeinrichtung zugeordnet werden, durch die der jeweils vom Extrusionskopf erzeugte Vorhang im Spinnbad umgelenkt wird.

Im Folgenden werden die erfindungsgemäße Vorrichtung und das erfindungsgemäße Verfahren anhand eines Ausführungsbeispiels näher erläutert.

Es zeigen:

Figur 1 eine schematische Darstellung eines Ausführungsbeispiels einer erfindungsgemäßen Vorrichtung zur Durchführung des erfindungsgemäßen Verfahrens;

Figur 2 eine schematische SchnittdarsteUung eines erfindungsgemäßen Extrusionskopfes.

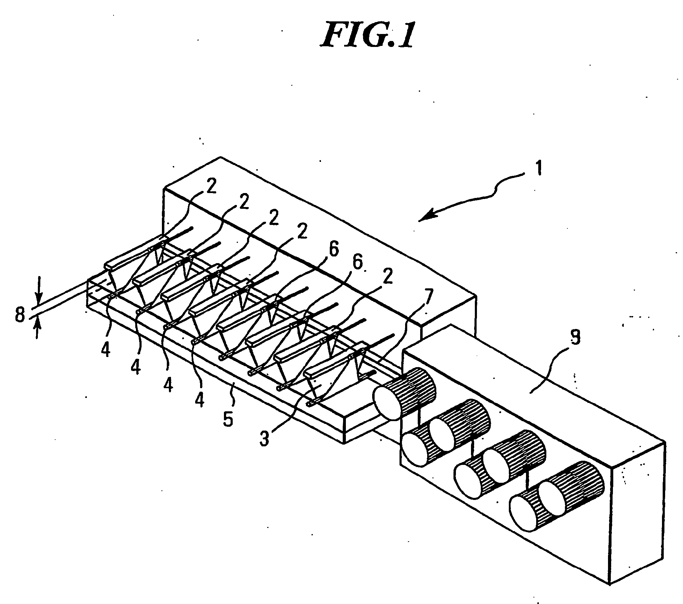

Zunächst wird der Aufbau eines Ausführungsbeispiels mit Bezug auf Figur 1 erläutert.

Figur 1 zeigt eine Anlage 1 zum Extrudieren einer Extrusionslösung, die Wasser, Zellulose und N-Methylmorpholin-N-Oxid (NMMO) enthält. Diese Extrusionslösung wird bei der Anlage der Figur 1 zu Endlosformkörpern in Form von Endlosfasern versponnen, die in einem weiteren Verfahrensschritt, hier nicht dargestellt auch zu Stapelfasern geschnitten werden können. Dazu weist die Anlage 1 eine Reihe von Extrusionsköpfen 2 auf, die in eine x- und y-Richtung ausgerichtet sind.

Die Anlage weist des weiteren einen Vorratsbehälter (nicht gezeigt) auf, in dem die Extrusionslösung gehalten wird. Von dem Vorratsbehälter wird die Extrusionslösung mittels Pumpen (nicht gezeigt) durch ein vorzugsweise beheiztes Leitungssystem (nicht gezeigt) an die Extrusionsköpfe gefördert. Im Leitungssystem ist ein Ausgleichsbehälter (nicht gezeigt) angeordnet, der eine gleichmäßige Förderung der Extrusionslösung an den Extrusionskopf auch bei Druck- und/oder Volumenstromschwankungen im Leitungssystem gewährleistet.

Die Extrusionsköpfe 2 weisen im Wesentlichen Stabform auf. Die Extrusionslösung wird durch die Extrusionsköpfe geleitet und dort zu Endlosformkörpern 3 extrudiert. Die Endlosformkörper 3 treten aus dem Extrusionskopf in Form eines Vorhangs aus. Der Vor hang wird mittels einer Umlenkeinrichtung 4, die in einem Fällbad 5 angeordnet ist, zu einer Sammeleinrichtung 6 umgelenkt. An der Sammeleinrichtung wird der Vorhang 3 im Wesentlichen auf einen Punkt zusammengeführt. Von der Sammeleinrichtung 6 an laufen die Endlosformkörper als Fadenschar 7 zu einer Vorrichtung 8, an der die Abzugsgeschwindigkeit v eingestellt wird.

Die Umlenkeinrichtung 4 und die Sammeleinrichtung 6 sind im Ausführungsbeispiel der Figur 1 als. Walze oder Rolle ausgestaltet. Die Walzen oder Rollen können starr, sich passiv mitdrehend oder drehend angetrieben ausgebildet sein. Die Einrichtungen 4 und 6 können auch als profilierte, gelagerte Rollen oder Warzen, mit oder ohne seitlicher Begrenzung, ausgeführt sein.

Zwischen den Extrusionsköpfen 2 und der Spinnbadoberftäche 5, in dem die Endlosformkörper eines einzelnen Extrusionskopfes als im Wesentlicher ebener Vorhang aus einzelnen Endlosformkörpern eintauchen, ist eine Luftstrecke 8 vorhanden.

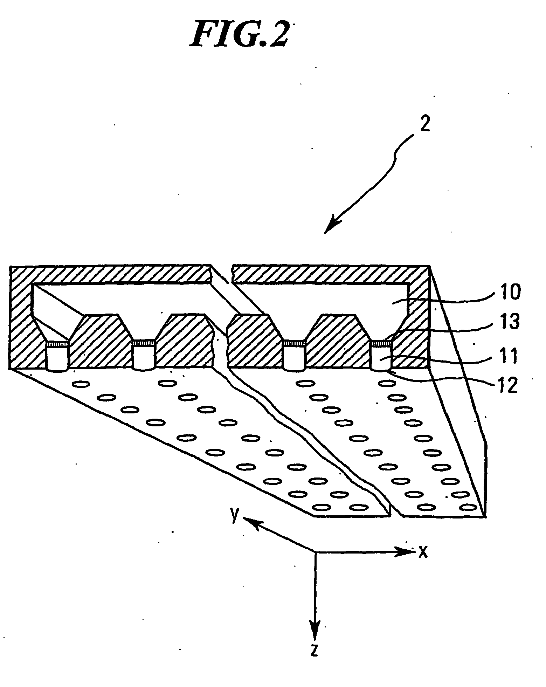

In Figur2 ist schematisch der Querschnitt durch einen Extrusionskopf 2 gezeigt.

Die Extrusionslösung wird im Extrusionskopf zunächst durch eine Sammelleitung 10. geführt. Von der Sammelleitung zweigen jeweils Extrusionskanäle 11 ab, die in einer Extrusionskanalöffnung 12 münden.

Zwischen der Sammelleitung 10 und dem Extrusionskanal 11 sind Einrichtungen 13 zur Vergleichmäßigung der Strömung und zur gleichmäßigen Verteilung des Massenstroms durch die einzelnen Extrusionskanäle vorgesehen. Diese Strömungseinrichtungen können beispielsweise die Form von Sieben oder Filtern haben.

Der Extrusionskopf in Figur 2 weist eine Anzahl r von in x-Richtung parallel angeordneten Reihen von Extrusionskanalöffnungen 12 auf.

Die Reihen der Strömungskanalöffnungen 12 erstrecken sich in y-Richtung. Beispielhaft sind in Figur 2 nur jeweils die beiden äußeren Reihen von Extrusionskanalöffnungen 12 gezeigt Aus den einzelnen Extrusionskanalöffnungen 12 wird in Extrusionsrichtung z die Extrusiontösung extrudiert. Bei den erfindungsgemäßen, stabförmig ausgestalteten Extrusionsköpfen sind in Y-Richtung wesentlich mehr Extrusionskanalöfinungen 12 angeordnet als in X-Richtung als Reihen vorhanden sind. Dadurch tritt aus einem Extrusionskopf 2 die Extrusionslösung im Wesentlichen als Vorhang auf.

Bei gegebener Reihenzahl r und erforderlichem Titer T wird bei der Anlage 1 die Abzugsgeschwindigkeit v mittels einer nicht dargestellten Steuervorrichtung der Anlage 1 so gesteuert, dass sie

$$v = B \cdot T^{0,33} \cdot 10000 \cdot (1/r^2)$$

beträgt, wobei B einen Wert von höchstens 4 aufweist und T der Fasertiter T in dtex ist. In diesem Bereich ist die Spinnsicherheit des Extrusionskopfes 2 sehr groß, so dass ein störungsfreies Spinnen bei hoher Spinnsicherheit möglich ist.

Die Abzugsgeschwindigkeit zur Einstellung der Faserfeinheit ist in m/min angegeben. Der Fachmann stellt die Extrusionsgeschwindigkeit der Spinnlösung durch die Extrusionskanalöffnung in Abhängigkeit vom Kapillardurchmesser und der Cellulosekonzentration so ein, daß bei gegebener Abzugsgeschwindigkeit der erforderliche Faser-Titer er zielt werden kann.

Des Weiteren ist der Extrusionskopf der Figur 2 so ausgelegt, dass er für die im Betrieb üblichen Geschwindigkeiten v eine Reihenanzahl r In x-Richtung aufweist, die

$$r = [(B/v) \cdot 10000 \cdot T^{0,33}]^{1/2}$$

beträgt.

Ausgehend von dem Prinzip, wie es im Ausführungsbeispiel der Figuren 1 und 2 dargestellt ist, wird nun die Funktion des Betriebsparameters B anhand eines Beispiels beschrieben.

In einer ersten Variante wird ein Extrusionskopf 2 mit 33 Reihen bei einer Spinngeschwindigkeit von v = 30 m/min und einem Fasertiter von T = 1,3 dtex verwendet. Das Spinnverhalten dieses Extrusionskopfes ermöglicht einen sicheren Spinnbetrieb.

Eine Verringerung der Reihenzahl r auf 28 bringt keine entscheidende Verbesserung beim Spinnverhalten. Allerdings ist die Wirtschaftlichkeit aufgrund des geringeren Fadenausstoßes kleiner.

Erhöht man dagegen bei diesen Bedingungen die Anzahl r auf 40, so steigt der Betriebsparameter B auf über 4, ein fehlerfreier, stabil geführter Spinnprozess kann nicht mehr gewährleistet werden.

Der Betriebsparameter B wurde in einer Vielzahl von Versuchen ermittelt, bei denen die erreichbaren Abzugsgeschwindigkeiten und die erhaltenen Fasertiter in Abhängigkeit von der Reihenanzahl der jeweils eingesetzten Düsen getestet wurden

Erfindungsgemäß kann eine Spinnposition bzw. eine Anlage 1 auch mehrere, in x- bzw. y- Richtung angeordnete Extrusionsköpfe aufweisen.

Durch die erfindungsgemäße Auslegung bzw. Geschwindigkeitssteuerung wird ohne Beblasung eine hohe Wirtschaftlichkeit gewährleistet.

**Patentansprüche**

1. Verfahren zum Extrudieren eines Endlosformkörpers (3) zur Herstellung eines Filamentes oder einer Stapelfaser aus einer Extrusionslösung, insbesondere einer Extrusionslösung enthaltend Wasser, Cellulose und tertiäres Aminoxid, wobei das Verfahren die folgenden Verfahrensschritte umfasst:

   - Durchleiten der Extrusionslösung durch eine Mehrzahl von Extrusionskanälen (11) mindestens eines Extrusionskopfes (2), wobei die Extrusionskanäle (11) in einer vorbestimmten Anzahl r von Reihen angeordnet sind, zu einer Extrusionskanalöff nung (12);
   - Extrudieren der Extrusionslösung durch die Extrusionskanalöffnungen (12) mit einer vorgebbaren Extrusionsgeschwindigkeit zu jeweils einem extrudierten Formkörper (3);
   - Durchleiten der extrudierten Endtosformkörper (3) durch einen Luftspalt,

   **gekennzeichnet durch** folgenden Verfahrensschritt

   - Steuern der Extrusionsgeschwindigkeit v in m/min in Abhängigkeit von der Anzahl r von Reihen, vom Fasertiter T in dtex und von einem Betriebsparameter B auf einen Wert

$$v = B \cdot T^{0.33} \cdot 10000 \cdot (1/r^2),$$

wobei der Betriebsparameter B einen Wert von höchstens 4 aufweist.

2. Verfahren nach Anspruch 1, **dadurch gekennzeichnet, dass** der Betriebsparameter einen Wert von höchstens 3,5 aufweist.

3. Verfahren nach Anspruch 1, **dadurch gekennzeichnet, dass** der Betriebsparameter einen Wert von höchstens 3 aufweist.

4. Verfahren nach einem der oben genannten Ansprüche, **dadurch gekennzeichnet, dass** der Betriebsparameter einen Wert von mindestens 0,5 aufweist.

5. Verfahren nach einem der oben genannten Ansprüche, **gekennzeichnet durch** folgenden Verfahrensschritt:

   - Ableiten der Endlosformkörper aus dem Extrusionskopf (2) **durch** den Luftspalt (8) in Form eines Vorhangs (3).

6. Verfahren nach Anspruch 5, **gekennzeichnet durch** folgenden Verfahrensschritt:

   - Durchleiten des Endlosformkörpers als Vorhang (3) **durch** ein Fällbad (5).

7. Verfahren nach Anspruch 5 oder 6, **gekennzeichnet durch** folgenden Verfahrensschritt:

   - Umlenken des Vorhangs im Fällbad (5).

8. Verfahren nach Anspruch 7, **gekennzeichnet durch** folgenden Verfahrensschritt:

   - Zusammenführen des umgelenkten Vorhangs (3) außerhalb des Fällbades (5) auf Im Wesentlichen einen Punkt.

9. Verfahren nach einem der oben genannten Ansprüche, **gekennzeichnet durch** folgenden Verfahrensschritt:

   - Durchleiten des Endlosformkörpers zur Herstellung eines Filamentes oder einer Stapelfaser aus einer Extrusionslösung im Luftspalt (8) **durch** im Wesentlichen ruhende Luft .

10. Extrusionskopf (2) zum Extrudieren eines Endlosformkörpers (3) zur Herstellung von Filamenten oder Stapelfasern aus einer Extrusionslösung, insbesondere einer Extrusionslösung enthaltend Wasser, Cellulose und tertiäres Aminoxid, mit einer Mehrzahl von Extrusionskanälen (11), durch welche die Extrusionslösung mit einer Extrusionsgeschwindigkeit v zu einer Extrusionskanalöffnung (12) geleitet ist, wobei die Extrusionslösung zur Herstellung eines Filamentes oder einer Stapelfaser aus einer Extrusionslösung durch die Extrusionskanalöffnung (12) zu einem Endlosformkörper (3) extrudierbar ist, **dadurch gekennzeichnet, dass** die Anzahl der Reihen r von Extrusionskanalöffnungen (12) des Extrusionskopfes (2) in Abhängigkeit vom Fasertiter T in dtex, von der Extrusionsgeschwindigkeit v in m/min und von einem Betriebsparameter B

$$r = [(B/v) \cdot 10000 \cdot T^{0.33}]^{1/2}$$

beträgt, wobei der Betriebsparameter B höchstens 4 beträgt.

11. Extrusionskopf nach Anspruch 10, **dadurch gekennzeichnet, dass** der Betriebsparameter B höchstens 3,5 beträgt.

12. Extrusionskopf nach Anspruch 10, **dadurch gekennzeichnet, dass** der Betriebsparameter B höchstens 3 beträgt.

13. Extrusionskopf nach einem der Ansprüche 10 bis 12, **dadurch gekennzeichnet, dass** der Betriebsparameter einen Wert von mindestens 0,5 aufweist.

14. Extrusionskopf nach einem der Ansprüche 10 bis13, **dadurch gekennzeichnet, dass** der Endlosformkörper zur Herstellung von Filamenten oder Stapelfasern aus einer Extrusionslösung in Form eines Vorhangs (3) aus dem Extrusionskopf (2) in einen Luftspalt austritt.

15. Anlage (1) zum Extrudieren eines Endlosfonnkörpers (3) zur Herstellung eines Filamentes oder einer Stapelfaser aus einer Extrusionslösung, insbesondere einer Extrusionslösung enthaltend Wasser, Cellulose und tertiäres Aminoxid, mit mindestens einem Extrusionskopf, **dadurch gekennzeichnet, dass** der Extrusionskopf (2) nach Anspruch 10 ausgebildet ist.

16. Anlage nach Anspruch 15, **dadurch gekennzeichnet, dass** eine Umlenkeinrichtung (4) in einem in Extrusionsnchtung hinter einem Luftspalt angeordnetes Lösungsbad vorgesehen ist, wobei der Vorhang (3) durch die Umlenkeinrichtung umgelenkt ist.

17. Anlage nach Anspruch 16. **dadurch gekennzeichnet, dass** in Extrusionsrichtung hinter der Umlenkeinrichtung (4) eine Sammeleinrichtung (6) angeordnet ist, durch die der Vorhang (3) auf im Wesentlichen eine Faser zusammengeführt ist.

18. Anlage nach einem der Ansprüche 15 bis 17, **dadurch gekennzeichnet, dass** eine Mehrzahl von Extrusionsköpfen (2) mit im Wesentlichen parallel ausgerichteten Reihen vorgesehen sind.

19. Anlage nach einem der Ansprüche 15 bis 18, **dadurch gekennzeichnet, dass** die Anlage eine Mehrzahl von Extrusionsköpfen aufweist, die in x- und/oder y- Richtung angeordnet und zu einer Spinnstelle zusammengefasst sind.

## Claims

1. A method for extruding a continuously molded body (3) for producing a filament or a staple fiber from an extrusion solution, particularly an extrusion solution containing water, cellulose and tertiary amine oxide, the method comprising the following steps:

    - passing the extrusion solution through a plurality of extrusion ducts (11) of at least one extrusion head (2) to an extrusion duct orifice (12), the extrusion ducts (11) being arranged at a predetermined number r of rows;
    - extruding the extrusion solution through the extrusion duct orifices (12) at a predeterminable extrusion rate into a respectively extruded molded body;
    - passing the extruded, continuously molded body (3) through an air gap, **characterized by** the following step:
    - controlling the extrusion rate v in m/min in dependence upon the number r of rows, the fiber titer T in dtex and an operational parameter B to obtain a value

$$v = B \cdot T^{0.33} \cdot 10000 \cdot (1/r^2),$$

    where the operational parameter B has a value of not more than 4.

2. The method according to claim 1, **characterized in that** the operational parameter has a value of not more than 3.5.

3. The method according to claim 1, **characterized in that** the operational parameter has a value of not more than 3.

4. The method according to any one of the aforementioned claims, **characterized in that** the operational parameter has a value of at least 0.5.

5. The method according to any one of the aforementioned claims, **characterized by** the following step:

    - guiding the continuously molded body (2) from the extrusion head (2) through the air gap (8) in the form of a curtain (3).

6. The method according to claim 5, **characterized by** the following step:

    - passing the continuously molded body as a curtain (3) through a precipitation bath (5).

7. The method according to claim 5 or 6, **characterized by** the following step:

    - deflecting the curtain in the precipitation bath (5).

8. The method according to claim 7, **characterized by** the following step:

    - converging the deflected curtain (3) outside the precipitation bath (5) towards substantially one point.

9. The method according to any one of the aforementioned claims, **characterized by** the following step:

    - passing the continuously molded body for producing a filament or a staple fiber from an extrusion solution in the air gap (8) through substantially stagnant air.

10. An extrusion head (2) for extruding a continuously molded body (3) for producing filaments or staple fibers from an extrusion solution, particularly an extrusion solution containing water, cellulose and tertiary amine oxide, comprising a plurality of extrusion ducts (11) through which the extrusion solution is passed at an extrusion rate v to an extrusion duct orifice (12), said extrusion solution being extrudable for producing a filament or a staple fiber from an extrusion solution through the extrusion duct orifice (12) to obtain a continuously molded body (3), **characterized in that** the number of rows r of extrusion duct orifices (12) of the extrusion head (2), in dependence upon the fiber titer T in dtex, the extrusion rate v in m/min and an operational parameter B, is

$$r = [(B/v) \cdot 10000 \cdot T^{0.33}]^{1/2}$$

where the operational parameter B is 4 at the most.

11. The extrusion head according to claim 10, **characterized in that** the operational parameter B is not more than 3.5.

12. The extrusion head according to claim 10, **characterized in that** the operational parameter B is not more than 3.

13. The extrusion head according to any one of claims 10 to 12, **characterized in that** the operational parameter has a value of at least 0.5.

14. The extrusion head according to any one of claims 10 to 13, **characterized in that** for the production of filaments or staple fibers from an extrusion solution the continuously molded body exits in the form of a curtain (3) from the extrusion head (2) into an air gap.

15. A system (1) for extruding a continuously molded body (3) for producing a filament or a staple fiber from an extrusion solution, particularly an extrusion solution containing water, cellulose and tertiary amine oxide, comprising at least one extrusion head, **characterized in that** the extrusion head (2) is designed according to claim 10.

16. The system according to claim 15, **characterized in that** a deflector (4) is provided in a solution bath arranged in the direction of extrusion behind an air gap, the curtain (3) being deflected by the deflector.

17. The system according to claim 16, **characterized in that** a collector (6) by which the curtain (3) is converged to substantially one fiber is arranged in the direction of extrusion downstream of the deflector (4).

18. The system according to any one of claims 15 to 17, **characterized in that** a plurality of extrusion heads (2) are provided with rows oriented substantially in parallel.

19. The system according to any one of claims 15 to 18, **characterized in that** said system comprises a plurality of extrusion heads which are arranged in x- and/or y-direction and combined to form one spinning location.

**Revendications**

1. Procédé pour extruder un corps conformé sans fin (3) pour réaliser un filament ou une fibre discontinue à partir d'une solution d'extrusion, en particulier d'une solution d'extrusion contenant de l'eau, de la cellulose et de l'aminoxyde tertiaire, le procédé comprenant les étapes de procédé suivantes :

   - faire passer la solution d'extrusion à travers une multitude de canaux d'extrusion (11) d'au moins une tête d'extrusion (2), les canaux d'extrusion (11) étant agencés dans un nombre r prédéterminé de rangées, vers une ouverture de canal d'extrusion (12) ;
   - extruder la solution d'extrusion à travers les ouvertures de canal d'extrusion (12) avec une vitesse d'extrusion pour réaliser respectivement un corps conformé sans fin (3) extrudé ;
   - faire passer le corps conformé sans fin (3) extrudé à travers une fente d'air,

   **caractérisé par** les étapes de procédé suivantes :

   - commander la vitesse d'extrusion v en m/min en fonction du nombre r de rangées, du titre des fibres T en dtex et d'un paramètre de fonctionnement B à une valeur

$$v = B \cdot T^{0,33} \cdot 10000 \ (1/r^2) \ ;$$

   le paramètre de fonctionnement B présentant une valeur d'au plus 4.

2. Procédé selon la revendication 1, **caractérisé en ce que** le paramètre de fonctionnement a une valeur d'au plus 3,5.

3. Procédé selon la revendication 1, **caractérisé en ce que** le paramètre de fonctionnement a une valeur d'au plus 3.

4. Procédé selon l'une des revendications précédentes, **caractérisé en ce que** le paramètre de fonctionnement a une valeur d'au moins 0,5.

5. Procédé selon l'une des revendications précédentes, **caractérisé par** l'étape de procédé suivante :

   - acheminer le corps conformé sans fin hors de la tête d'extrusion (2) à travers la fente d'air (8) sous la forme d'un rideau (3).

6. Procédé selon la revendication 5, **caractérisé que** par l'étape de procédé suivante :

   - faire passer le corps conformé sans fin sous forme de rideau (3) à travers un bain de précipitation (5).

7. Procédé selon la revendication 5 ou 6, **caractérisé par** l'étape de procédé suivante :

   - dévier le rideau dans le bain de précipitation (5).

**8.** Procédé selon la revendication 7, **caractérisé par** l'étape de procédé suivante :

> - rassembler le rideau (3) dévié en dehors du bain de précipitation (5) sur essentiellement un point.

**9.** Procédé selon l'une des revendications précédentes, **caractérisé par** l'étape de procédé suivante :

> - faire passer le corps conformé sans fin pour réaliser un filament ou une fibre discontinue à partir d'une solution d'extrusion dans la fente d'air (8) à travers de l'air essentiellement au repos.

**10.** Tête d'extrusion (2) pour extruder un corps conformé sans fin (3) pour réaliser un filament ou une fibre discontinue à partir d'une solution d'extrusion, en particulier d'une solution d'extrusion contenant de l'eau, de la cellulose et de l'aminoxyde tertiaire, comportant une multitude de canaux d'extrusion (11) à travers lesquels on fait passer la solution d'extrusion avec une vitesse d'extrusion $\underline{v}$ vers une ouverture de canal d'extrusion (12), la solution d'extrusion pouvant être extrudée pour réaliser un filament ou une fibre discontinue à partir d'une solution d'extrusion à travers l'ouverture de canal d'extrusion (12) pour former un corps conformé sans fin (3), **caractérisée en ce que** le nombre de rangées $\underline{r}$ d'ouvertures de canal d'extrusion. (12) de la tête d'extrusion (2) est de

$$r = [(B/v) \cdot 10000 \cdot T^{0,33}]^{\frac{1}{2}}$$

en fonction du titre des fibres T en dtex, de la vitesse d'extrusion $\underline{v}$ en m/min et d'un paramètre de fonctionnement B, le paramètre de fonctionnement B étant au plus de 4.

**11.** Tête d'extrusion selon la revendication 10, **caractérisée en ce que** le paramètre de fonctionnement B est au plus de 3,5.

**12.** Tête d'extrusion selon la revendication 10, **caractérisée en ce que** le paramètre de fonctionnement B est au plus de 3.

**13.** Tête d'extrusion selon l'une des revendications 10 à 12, **caractérisée en ce que** le paramètre de fonctionnement B a une valeur d'au moins 0,5.

**14.** Tête d'extrusion selon l'une des revendications 10 à 13, **caractérisée en ce que** le corps conformé sans fin pour réaliser des filaments ou des fibres discontinues à partir d'une solution d'extrusion sous forme d'un rideau (3) sort de la tête d'extrusion (2) dans une fente d'air.

**15.** Installation (1) pour extruder un corps conformé sans fin (3) pour réaliser un filament ou une fibre discontinue à partir d'une solution d'extrusion, en particulier d'une solution d'extrusion contenant de l'eau, de la cellulose et de l'aminoxyde tertiaire, comportant au moins une tête d'extrusion, **caractérisée en ce que** la tête d'extrusion (2) est réalisée selon la revendication 10.

**16.** Installation selon la revendication 15, **caractérisée en ce qu'**il est prévu un dispositif de déviation (4) dans un bain de solution agencé derrière une fente d'air en direction d'extrusion, le rideau (3) étant dévié par le dispositif de déviation.

**17.** Installation selon la revendication 16, **caractérisée en ce que** derrière le dispositif de déviation (4) en direction d'extrusion est agencé un dispositif collecteur (6) à travers lequel le rideau (3) est rassemblé pour former essentiellement une fibre.

**18.** Installation selon l'une des revendications 15 à 17, **caractérisée en ce qu'**il est prévu une multitude de têtes d'extrusion (2) avec des rangées orientées sensiblement en parallèle.

**19.** Installation selon l'une des revendications 15 à 18, **caractérisée en ce que** l'installation présente une multitude de têtes d'extrusion qui sont agencées en direction x et/ou y et qui sont rassemblées en un point de filage.

# FIG.1

# FIG.2